# EUROPEAN PATENT APPLICATION

(11) **EP 1 868 069 A1**
(43) Date of publication of application: **19.12.2007**
(21) Application number: 06729638.4
(22) Date of filing: 22.03.2006
(51) Int. Cl.: G06F 3/048, G06F 9/445

(54) **PORTABLE INFORMATION PROCESSOR AND INSTALLATION METHOD**

(30) Priority: 22.03.2005 JP 2005082172
(71) Applicant: MATSUSHITA ELECTRIC INDUSTRIAL CO., LTD, Kadoma-shi, Osaka 571-8501 (JP)
(72) Inventor: TAKAHASHI, Masaki, c/o Matsushita Electric Industrial Co., Ltd., IPROC, 7F Twin 21, Osaka, 540-6207 (JP); YAMADA, Kazushige c/o Matsushita Electric Industrial Co., Ltd., IPROC, 7F Twin 21, Osaka, 540-6207 (JP); UEDA, Masaomi c/o Matsushita Electric Industrial Co., Ltd., IPROC, 7F Twin 21, Osaka, 540-6207 (JP)
(74) Representative: Pautex Schneider, Nicole Véronique
(86) International application number: PCT/JP2006/305671
(87) International publication number: WO 2006/101111

(57) **Abstract**

It is an object of the present invention to provide a portable information processor which can display a practical menu image of registered programs on a relatively small screen. The portable information processor, comprises: an installing unit (**12**) for installing a program; a category information obtaining unit (**13**) for obtaining, when the program is installed, category information indicating a category of the newly-installed program; a category judging unit (**15**) for comparing the newly-installed program with registered programs on the basis of the category information obtained by the category information obtaining unit (**13**), and judging whether or not the newly-installed program overlaps in category with one or more of the registered programs.

## Description

### TECHNICAL FIELD OF THE INVENTION

The present invention relates to a portable information processor, such as for example a cellular telephone and a personal digital assistance, and an installation method of installing a program on the portable information processor.

### DESCRIPTION OF THE RELATED ART

In recent years, a market of a highly-functionalized portable information processor such as for example a cellular telephone and a personal digital assistance has been more and more enlarged. For example, the cellular telephone which programs of optional functions can be selectively installed on is getting more and more popular. When a program is newly installed on the portable information processor, an icon constituted as a start button for starting the newly-installed program is added to a menu.

For example, the conventional portable information processor displays a menu of programs classified on the basis of group identification information. When two or more programs are classified into a group as being the same in category as each other, icons of programs classified into the group are arranged on a menu to be displayed on a screen (see, for example, a patent document 1).

Patent document 1: Japanese published unexamined application No.: 2003-263324

### DISCLOSURE OF THE INVENTION

### PROBLEMS TO BE SOLVED BY THE INVENTION

The user, however, tends to tediously operate the conventional mobile terminal apparatus while watching a menu displayed on a relatively small screen, the menu including a frequently-used programs and rarely-needed programs.

It is, therefore, an object of the present invention to provide a portable information processor which can display a useful menu on a relatively small screen.

### MEANS FOR SOLVING THE PROBLEMS

The portable information processor according to the present invention comprises: a display unit operable to display a menu image indicating a menu of registered programs, the menu image having a plurality of sections; a display control unit operable to control the display unit to superimpose icons on the sections of the menu image as start buttons for starting the registered programs; a category information obtaining unit operable to obtain category information indicating a category of a newly-installed program; a category judging unit operable to compare the newly-installed program with the registered programs, and to judge whether or not the newly-installed program overlaps in category with one or more of the registered programs, wherein the display control unit decides, on the basis of the judgment made by the category judging unit, a section to be occupied by an icon as a start button for starting the newly-installed program.

The portable information processor thus constructed as previously mentioned can prevent the programs from overlapping in category with the newly-installed program.

In the portable information processor according to the present invention, when one of the registered programs is judged as overlapping in category with the newly-installed program by the category judging unit, the display control unit may delete an icon of a registered program judged as overlapping in category with the newly-installed program, and superimpose the icon of the newly-installed program on a section of the deleted icon.

The portable information processor thus constructed as previously mentioned can display a menu of programs without allowing the programs to overlap in category with one another.
In the portable information processor according to the present invention, when two or more of the registered programs are judged as overlapping in category with the newly-installed program by the category judging unit, the display control unit deletes icons of registered programs judged as overlapping in category with the newly-installed program, superimposes the icon of the newly-installed program on one of sections of the deleted icons selected as having display priority over the other of the sections of the deleted icons, and moves up, to the other of the sections of the deleted icons icons superimposed on sections less in display priority than the other of the sections of the deleted icons.

The portable information processor thus constructed as previously mentioned can display a menu of programs without allowing the programs to overlap in category with one another.

In the portable information processor according to the present invention, when two or more of the registered programs are judged as overlapping in category with the newly-installed program by the category judging unit, the display control unit may delete icons of registered programs judged as overlapping in category with the newly-installed program, combine sections of the deleted icons to form a combined section, and decide the size of the icon of the newly-installed program on the basis of the area of the combined section.

The portable information processor thus constructed as previously mentioned can display a menu of programs without changing the positions of icons of programs other than programs judged as overlapping in category with the newly-installed program. The newly-installed program is recognized by the user as being classified into two or more categories.

In the portable information processor according to the present invention, when two or more of the registered programs are judged as overlapping in category with the newly-installed program by the category judging unit, the display control unit may delete icons of registered programs judged as overlapping in category with the newly-installed program, superimpose the icon of the newly-installed program on one of sections of the deleted icons selected as having display priority over the other of the sections of the deleted icons, and superimpose, on the other of the sections of the deleted icons, information produced by a resident function of the newly-installed program.

The portable information processor thus constructed as previously mentioned can display a menu of programs without changing the positions of icons of programs other than programs judged as overlapping in category with the newly-installed program. The information produced by a resident function of the newly-installed program is recognized by the user.

In the portable information processor according to the present invention, when two or more of the registered programs are judged as overlapping in category with the newly-installed program by the category judging unit, the display control unit may delete icons of registered programs judged as overlapping in category with the newly-installed program, and superimpose the icon of the newly-installed program on each section of the deleted icons.

The portable information processor thus constructed as previously mentioned can display a menu of programs without changing the positions of icons of programs other than programs judged as overlapping in category with the newly-installed program.

The portable information processor according to the present invention may further comprise a category information storage unit having category information table indicating categories of the registered programs. The category information obtaining unit may register the category information of the newly-installed program in the category information table. The category judging unit may judge whether or not the newly-installed program overlaps in category with one or more of the registered programs on the basis of the category information table, and delete, from the category information table on the basis of the judgment of the category judging unit, category information of one or more registered programs judged as overlapping in category with the newly-installed program.

The portable information processor thus constructed as previously mentioned can judge easily on whether or not the newly-installed program overlaps in category with one or more of the registered programs.

In the portable information processor according to the present invention, the category information storage unit may make a backup copy of the category information of the registered programs judged as overlapping in category with the newly-installed program when the category information of the registered programs judged as overlapping in category with the newly-installed program is deleted from the category information table, and restore a menu by using the backup copy of the category information in the category information table when the backup copy of the category information is designated.

The portable information processor thus constructed as previously mentioned can recover a program deleted from the menu.

In the portable information processor according to the present invention may further comprise a menu information storage unit having a menu information table indicating menu information of the registered programs. The display control unit may register menu information of the newly-installed program in the menu information table when the category information of the newly-installed program is registered in the category information table, delete, from the menu information table, menu information of one or more registered programs judged as overlapping in category with the newly-installed program when category information of the registered programs judged as overlapping in category with the newly-installed program is deleted from the category information table, and change the positions of the icons as the start buttons for starting the registered programs on the basis of the updated menu information table.

The portable information processor thus constructed as previously mentioned can display a menu of programs without allowing the programs to overlapping in category with one another.

In the portable information processor according to the present invention, may further comprise a program uninstalling unit operable to uninstall one or more registered programs judged as overlapping in category with the newly-installed program when the category information of the one or more registered programs judged as overlapping in category with the newly-installed program is deleted from the category information table.

The portable information processor thus constructed as previously mentioned can be reduced in amount of memory assigned to programs.

In the portable information processor according to the present invention, when two or more registered programs judged as overlapping in category with the newly-installed program are uninstalled, the display control unit may delete icons of uninstalled programs from the menu image, superimpose the icon of the newly-installed program on one of sections of the deleted icons selected as having display priority over the other of the sections of the deleted icons, and move up icons superimposed on sections less in display priority than the other of the sections of the deleted icons.

The portable information processor thus constructed as previously mentioned can display a menu of programs without allowing the programs to overlapping in category with one another.

In the portable information processor according to the present invention, when two or more registered programs judged as overlapping in category with the newly-installed program are uninstalled, the display control unit may delete, from the menu image, icons of uninstalled programs, combine sections of the deleted icons to form a combined section, and decide the size of the icon of the newly-installed program on the basis of the area of the combined section.

The portable information processor thus constructed as previously mentioned can display a menu of programs without changing the positions of icons of programs other than programs judged as overlapping in category with the newly-installed program. The newly-installed program is recognized by the user as being classified into two or more categories.

In the portable information processor according to the present invention, when two or more registered programs judged as overlapping in category with the newly-installed program are uninstalled, the display control unit may delete, from the menu image, icons of uninstalled programs, superimpose the icon of the newly-installed program on one of sections of the deleted icons selected as having display priority over the other of the sections of the deleted icons, and superimpose, on the other of the sections of the deleted icons, information produced by a resident function of the newly-installed program.

The portable information processor thus constructed as previously mentioned can display a menu of programs without changing the positions of icons of programs other than programs judged as overlapping in category with the newly-installed program. The information produced by a resident function of the newly-installed program is recognized by the user.

In the portable information processor according to the present invention, when two or more registered programs judged as overlapping in category with the newly-installed program are uninstalled, the display control unit may delete, from the menu image, icons of uninstalled programs, and superimpose the icon of the newly-installed program on each section of the deleted icons.

The portable information processor thus constructed as previously mentioned can display a menu of programs without changing the positions of icons of programs other than programs judged as overlapping in category with the newly-installed program.

The installation method according to the present invention comprises: controlling a display unit to superimpose icons on sections of menu image as start buttons for starting registered programs, obtaining category information indicating a category of a newly-installed program, comparing the newly-installed program with the registered programs, and judging whether or not the newly-installed program overlaps in category with one or more of the registered programs, wherein, when the judgment is made that said newly-installed program overlaps in category with one or more of said registered programs, said installing method is of deciding a section to be occupied by an icon as a start button for starting said newly-installed program.

The installation method thus constructed according to the present invention can prevent programs including the newly-installed program from overlapping in category with one another.

The installation method according to the present invention may further comprise: uninstalling, when a registered program is judged as overlapping in category with the newly-installed program, the registered program judged as overlapping in category with the newly-installed program.

The installation method thus constructed according to the present invention can be reduced in amount of memory assigned to programs by uninstalling a registered program judged as overlapping in category with the newly-installed program.

The installation method according to the present invention may further comprise: making a backup copy of a registered program judged as overlapping in category with the newly-installed program when uninstalling the registered program judged as overlapping in category with the newly-installed program.

The installation method thus constructed according to the present invention can restore a menu with ease by making a backup copy of a registered program judged as overlapping in category with the newly-installed program.

The installation method according to the present invention may further comprise: making a backup copy of category information of a registered program judged as overlapping in category with the newly-installed program when uninstalling the registered program judged as overlapping in category with the newly-installed program.

The installation method thus constructed according to the present invention can restore a menu on the basis of the backup copy of the category information.

### ADVANTAGEOUS EFFECT OF THE INVENTION

It is an object of the present invention to provide a portable information processor which can display a useful menu of programs on a relatively small screen without allowing the programs to overlap in category with a newly-installed program.

### BRIEF DESCRIPTION OF THE DRAWINGS

FIG. **1** is a block diagram showing a general construction of the portable information processor according to an embodiment of the present invention.
FIG. **2** is a diagram showing an example of categories of programs to be executed by the portable information processor according to the embodiment of the present invention.
FIG. **3** is a diagram showing an example of a category information table to be stored in the category information storage unit of the portable information processor according to the embodiment of the present invention, an example of a category information file of a program to be installed, and a category information table updated after a program is newly installed.
FIG. **4** is a diagram showing, in contrast with the menu image displayed before the program is newly installed, the menu image updated on the basis of the first display rule by the display control unit of the portable date processor according to the embodiment of the present invention.
FIG. **5** is a diagram showing, in contrast with the menu image displayed before the program is newly installed, the menu image updated on the basis of the second display rule by the display control unit of the portable date processor according to the embodiment of the present invention.
FIG. **6** is a diagram showing, in contrast with the menu image displayed before the program is newly installed, the menu image updated on the basis of the third display rule by the display control unit of the portable date processor according to the embodiment of the present invention.
FIG. **7** is a diagram showing, in contrast with the menu image displayed before the program is newly installed, the menu image updated on the basis of the fourth display rule by the display control unit of the portable date processor according to the embodiment of the present invention.
FIG. **8** is a flow chart showing an installing operation of the portable date processor according to the embodiment of the present invention.
FIG. **9** is a flow chart showing a display rule selecting operation to be performed by the display control unit of the portable date processor according to the embodiment of the present invention.
FIG. **10** is a diagram showing an example of a menu information table updated on the basis of the first display rule, with the newly-installed program, in the portable date processor according to the embodiment of the present invention.
FIG. **11** is a flow chart showing an operation to be performed to display a menu on a screen on the basis of the menu information table by the portable date processor according to the embodiment of the present invention.
FIG. **12** is a diagram showing an example of a menu information table updated on the basis of the second display rule, with the newly-installed program, in the portable date processor according to the embodiment of the present invention.
FIG. **13** is a flow chart showing an operation to be performed to display a menu on a screen on the basis of the menu information table by the portable date processor according to the embodiment of the present invention.
FIG. **14** is a diagram showing an example of a menu information table updated on the basis of the third display rule, with the newly-installed program, in the portable date processor according to the embodiment of the present invention.
FIG. **15** is a flow chart showing an operation to be performed to display a menu on a screen on the basis of the menu information table by the portable date processor according to the embodiment of the present invention.
FIG. **16** is a diagram showing an example of a menu information table updated on the basis of the fourth display rule, with the newly-installed program, in the portable date processor according to the embodiment of the present invention.
FIG. **17** is a flow chart showing an operation to be performed to display a menu on a screen on the basis of the menu information table by the display control unit of the portable date processor according to the embodiment of the present invention.

### EXPLANATION OF THE REFERENCE NUMERALS

**10:** portable information processor
**11:** unit operable to obtain a program to be installed
**12:** program installing unit
**13:** category information obtaining unit
**14:** program storage unit
**15**: category judging unit
**16:** program uninstalling unit
**17:** category information storage unit
**18:** menu information storage unit
**20:** display control unit
**21:** display rule information storage unit
**22:** display unit

### DESCRIPTION OF THE PREFERRED EMBODIMENTS

The embodiment of the portable information processor according to the present invention will be described hereinafter with reference to accompanying drawings.

The following description will be directed to the construction of the portable information processor **10** according to the embodiment of the present invention.

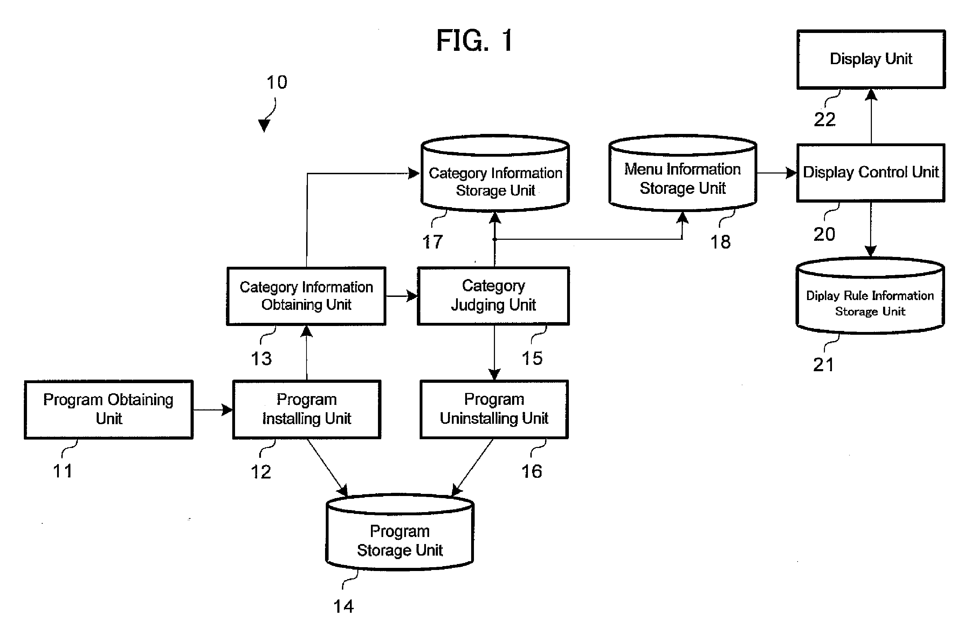

As shown in FIG. **1,** the portable information processor **10** comprises a program obtaining unit **11** for obtaining a program file from a memory medium, a program installing unit **12** for installing a program of the program file, and a category information obtaining unit **13** for obtaining category information of the program of the program file.

In this embodiment, the program obtaining unit **11** obtains a program file from a memory medium. However, the program obtaining unit **11** may download a program file from a server.

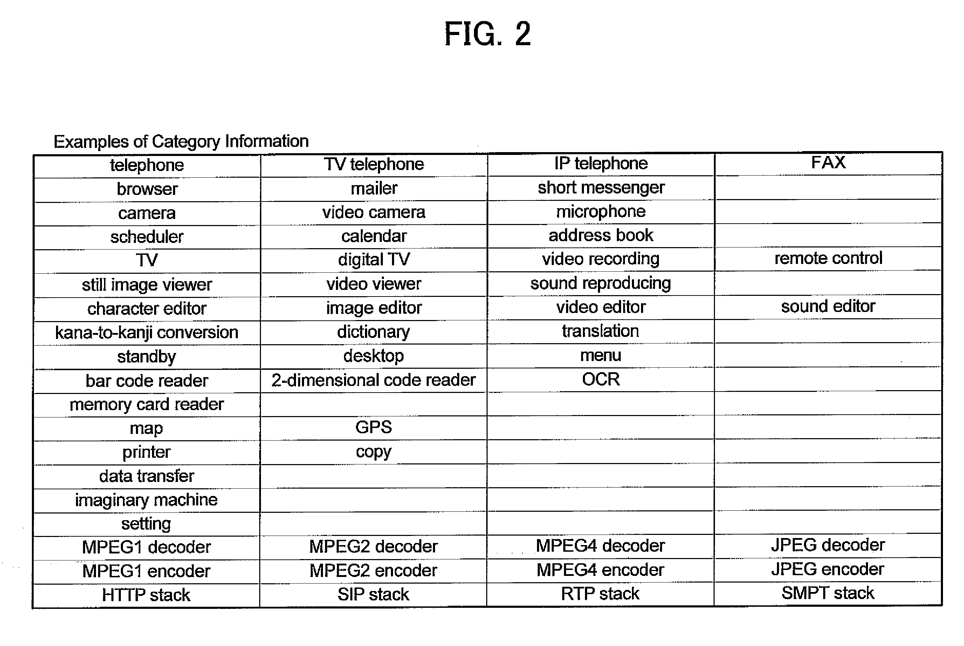

FIG. **2** is a diagram showing an example of categories of programs to be executed in the portable information processor **10.** As shown in FIG. **2,** a program for allowing the portable information processor **10** to function as a mailer is classified into "mailer". A program for allowing the portable information processor **10** to function as both mailer and browser is classified into "mailer and browser".

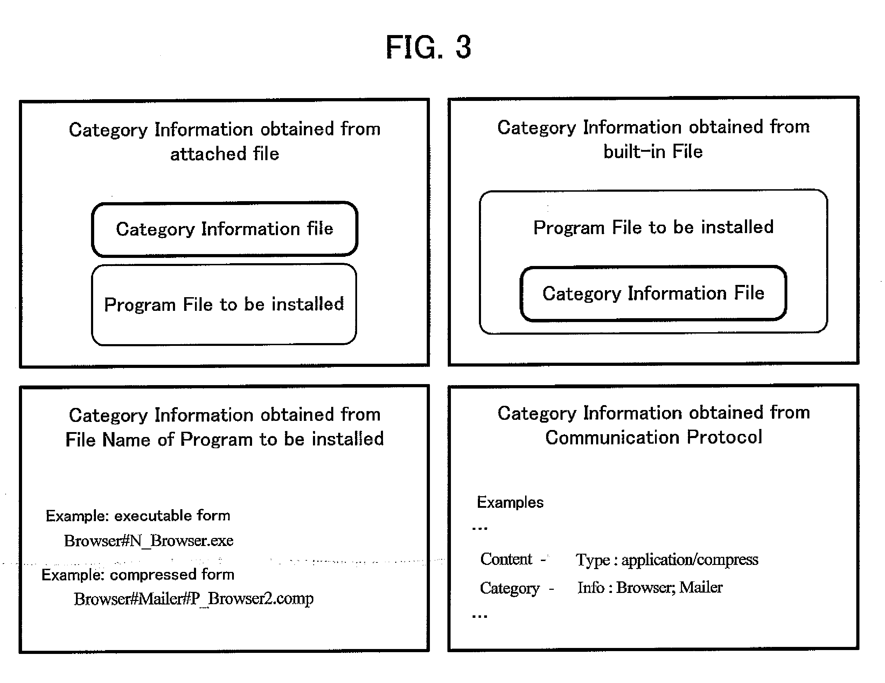

As shown in FIG. **3,** the category information may be attached as a category information file to the program file, or may be accommodated in the program file. When category information of a newly-installed program cannot be obtained from the program file, the category information of the newly-installed program may be obtained from a file name or a communication protocol of the newly-installed program.

The portable information processor **10** further comprises a category judging unit **15** for comparing category information of the newly-installed program obtained by the category information obtaining unit **13** with category information of registered programs, and judging whether or not the newly-installed program overlaps in category with one or more of the registered programs, a display unit **22** for displaying a menu image indicating a menu of the registered programs, and a display control unit **20** for controlling the display unit **22** to superimpose icons on the sections of the menu image as start buttons for starting the registered programs.

The display control unit **20** decides, on the basis of the judgment of the category judging unit **15,** a section to be occupied by an icon as a start button of the newly-installed program.

The portable information processor **10** may further comprise a program uninstalling unit 16 for uninstalling, when one or more registered programs are judged as overlapping in category with the newly-installed program by the category judging unit **15,** the registered programs judged as overlapping in category with the newly-installed program. On the other hand, the portable information processor **10** may delete, from the menu, icons of registered programs judged as overlapping in category with the newly-installed program without further comprising a program uninstalling unit **16.** A backup copy of one or more programs uninstalled from the menu may be made in the portable information processor **10.** A menu may be restored on the basis of the backup copy of the uninstalled programs without allowing the registered programs to overlap in category with the newly-installed program.

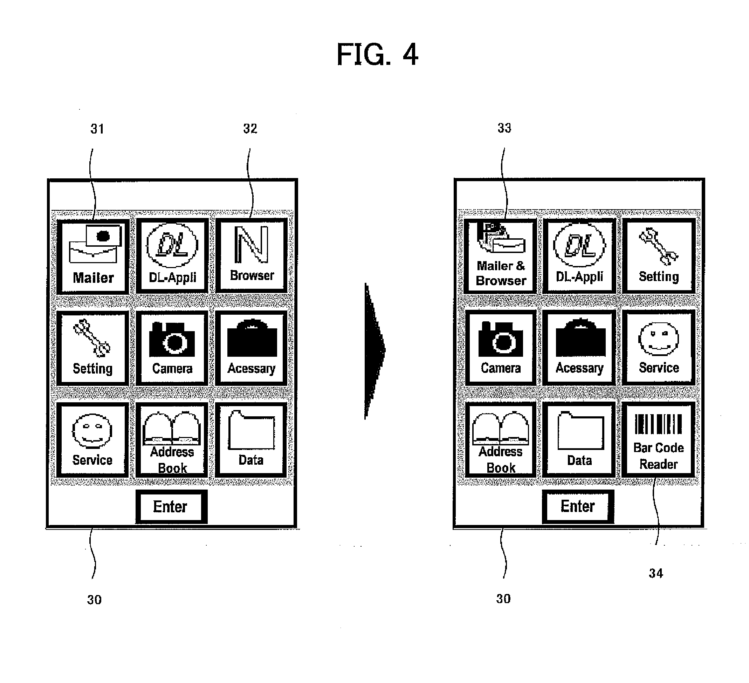

When two or more registered programs are judged as overlapping in category with the newly-installed program by the category judging unit **15,** the display control unit **20** may delete, from the menu image, icons of registered programs overlapping in category with the newly-installed program, superimpose the icon of the newly-installed program on one of sections of the deleted icons selected as having display priority over the other of the sections of the deleted icons, and move up icons superimposed on sections less in display priority than the other of the sections of the deleted icons. FIG. **4** is a diagram showing an example of the above-mentioned menu image. As shown in FIG. **4,** the icons **31** and **32** superimposed, as start buttons for starting a mailer and a browser program, on sections of the menu image displayed on the screen **30** are deleted by the display control unit **20.** The icon **33** of the newly-installed program "Mailer & Browser" is then superimposed, in place of the icon **31** of the mailer program, on a section from which the icon **31** of the mailer program was deleted. The portable information processor, therefore, can display the menu image on the screen without a program overlapping in category with the newly-installed program.

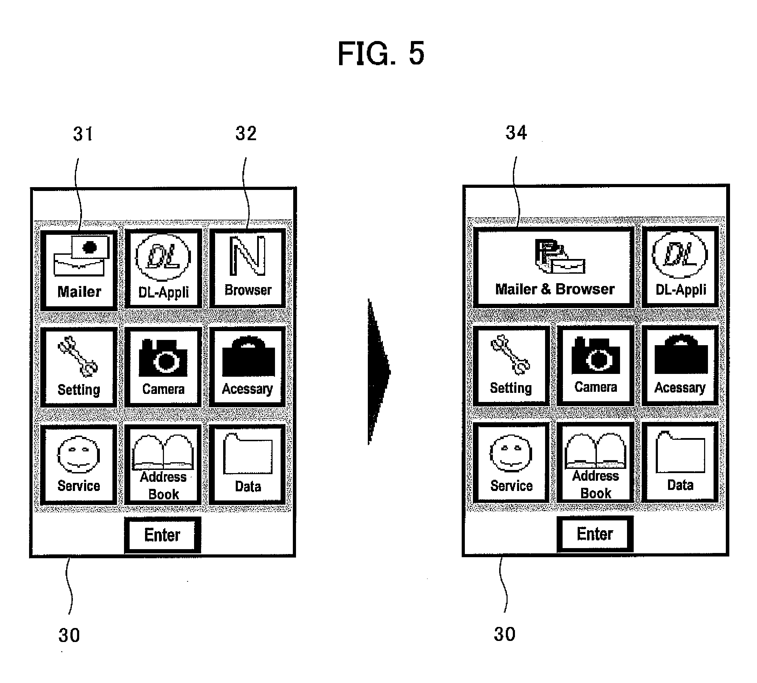

When two or more registered programs are judged as overlapping in category with the newly-installed program by the category judging unit **15,** the display control unit **20** may delete icons of registered programs overlapping in category with the newly- installed program, combine sections of the deleted icons to form a combined section, and decide the size of the icon of the newly-installed program on the basis of the area of the combined section. FIG. **5** is a diagram showing an example of the above-mentioned menu image. As shown in FIG. **5,** the icons **31** and **32** superimposed, as start buttons for starting a mailer and a browser program, on sections of the menu image displayed on the screen **30** are deleted by the display control unit **20.** The icon **34** of the newly-installed Mailer & Browser program is then superimposed on a combined section formed from the sections of the icons **31** and **32.** The portable information processor, therefore, can superimpose the icon of the newly-installed program on the combined section of the menu image without changing positions of icons of programs judged as being different in category from the newly-installed program. The newly-installed program can be recognized as having two or more categories.

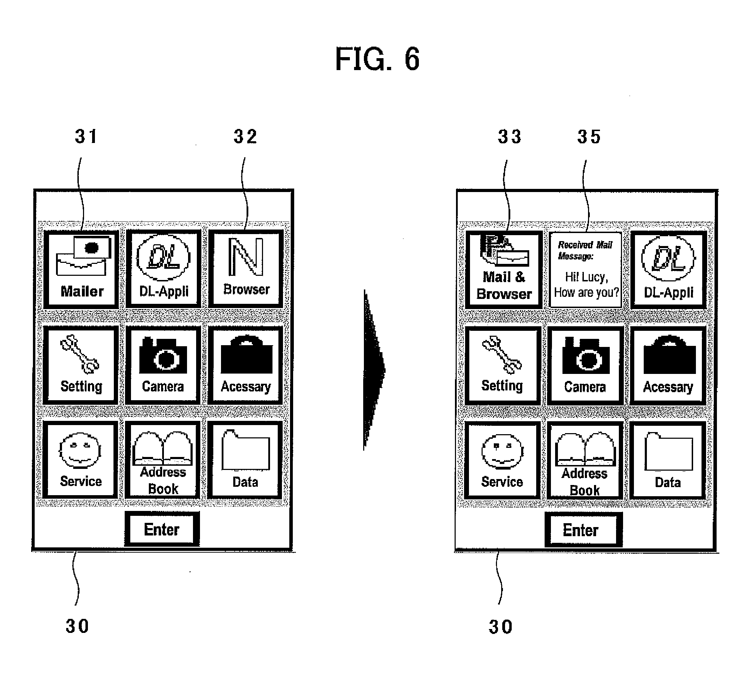

When two or more registered programs are judged as overlapping in category with the newly-installed program by the category judging unit **15,** the display control unit 20 may delete icons of registered programs overlapping in category with the newly-installed program, to superimpose the icon of the newly-installed program on one of sections of the deleted icons selected as having display priority over the other of the sections of the deleted icons, and to superimpose, on the other of the sections of the deleted icons, information produced by a resident function of the newly-installed program. FIG. **6** is a diagram showing an example of the above-mentioned menu image. As shown in FIG. **6,** the icons **31** and **32** superimposed, as start buttons for starting a mailer and a browser program, on sections of the menu image displayed on the screen **30** are deleted by the display control unit **20.** The icon **33** of the newly-installed Mailer & Browser program is then superimposed, in place of the icon **31** of the mailer program, on a section from which the icon **31** of the mailer program was deleted. On the other hand, the information **35** produced by a resident function of the newly-installed program is displayed on the other of the sections of the deleted icons. The portable information processor, therefore, can display the menu image on the screen without a program overlapping in category with the newly- installed program.

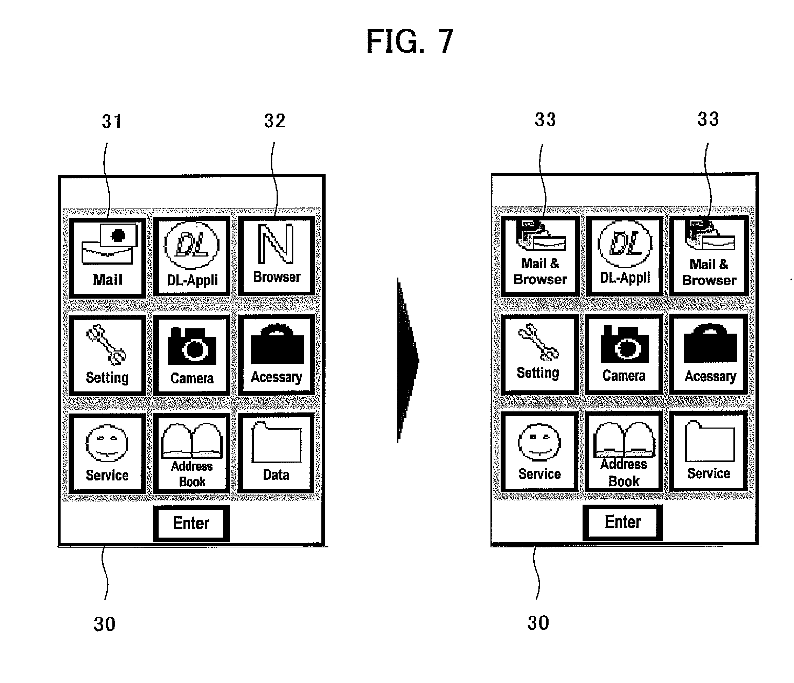

When two or more registered programs are judged as overlapping in category with the newly-installed program by the category judging unit **15,** the display control unit **20** may delete icons of two or more registered programs judged as overlapping in category with the newly- installed program, and superimpose the icon of the newly-installed program on each section of the deleted icons. FIG. **7** is a diagram showing an example of a menu displayed on a screen **30.** As shown in FIG. **7,** the icons **31** and **32** superimposed, as start buttons for starting a mailer and a browser program, on sections of the menu image displayed on the screen **30** are deleted by the display control unit **20.** The icon **33** of the newly-installed program named "Mailer & Browser" is then superimposed, in place of the icons **31** and **32** of the mailer and browser programs, on each of sections from which the icons **31** and **32** of the mailer and browser programs was deleted.

While there has been described in the foregoing description about an operation to be performed to install a program related to two categories named mailer and browser, the present invention is not limited to an installation of a program related to two categories named mailer and browser.

In the portable information processor **10** according to the embodiment of the present invention, a menu is displayed on a screen on the basis of a menu display method including a display control step of controlling a display unit **22** to superimpose, on sections of a menu image, icons constructed as start buttons for starting programs.

In the portable information processor **10** according to the embodiment of the present invention, a program is installed on the basis of an installation method comprising: a category information obtaining step of obtaining category information indicating a category of the newly-installed program; a category judging step of comparing the newly-installed program with the registered programs, and judging whether or not the newly-installed program overlaps in category with one or more of the registered programs. The display control step is of deciding, on the basis of the judgment made in the category judging step, a section to be occupied by an icon as a start button for starting the newly-installed program.

When one or more registered programs are judged as overlapping in category with the newly-installed program by the category judging unit **15,** the installation method may further comprise a program uninstalling step of uninstalling one or more registered programs judged as overlapping in category with the newly-installed program. When the registered programs judged as overlapping in category with the newly-installed program is uninstalled in the program uninstalling step, a backup copy of the registered programs judged as overlapping in category with the newly-installed program may be made in the program uninstalling step. When the registered programs judged as overlapping in category with the newly-installed program is uninstalled in the program uninstalling step, a backup copy of the category information of the registered programs judged as overlapping in category with the newly-installed program may be made in the program uninstalling step.

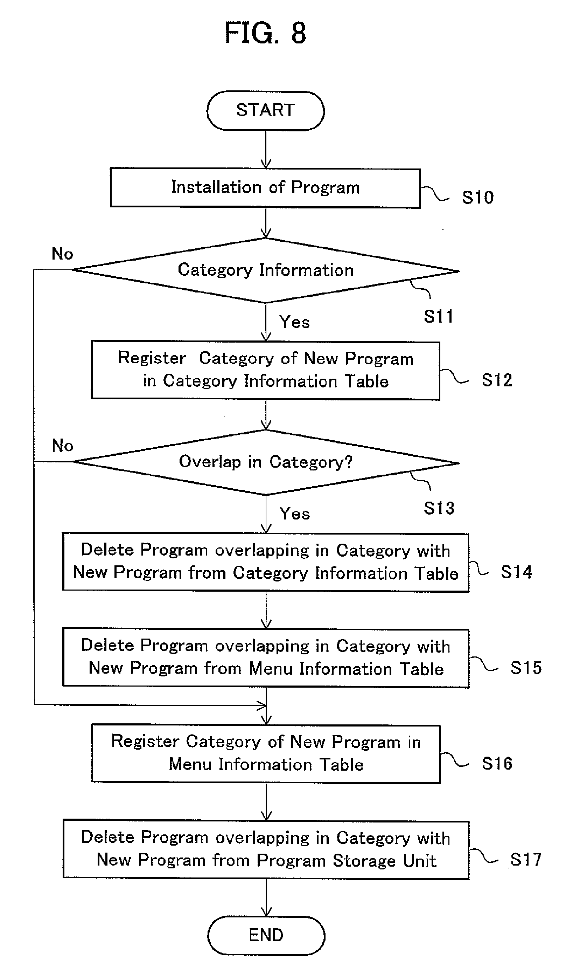

The operation to be performed, at a time when a program is newly installed from a memory medium, by the portable information processor **10** according to the embodiment of the present invention will be then described hereinafter with reference to FIG. **8.** Here, the memory medium has a program file indicating a program to be newly-installed and a category information file indicating a category of this program.

The program file is firstly obtained from the memory medium, while the program represented by the program file is installed by the installing unit **12** (in step **S10**). When this program file is obtained from the memory medium, the judgment is made (in step **S11**) on whether or not the category information file, attached to this program file, is in the memory medium. When the judgment is made in the step **S11** that the category information file is in the memory medium, the category information file is obtained from the memory medium by the category information obtaining unit **13.** The category of the newly-installed program is then registered in the category information table of the category information storage unit **17** (in step **S12**). When, on the other hand, the judgment is made in the step **S11** that the category information file is not in the memory medium, the category information file is obtained from the memory medium by the category information obtaining unit **13.** The menu information of the newly-installed program is registered in the menu information table of the menu information storage unit **18** (in step **S17**).

The registered programs are then compared in category with the newly-installed program on the basis of the category information table. The judgment is then made (in step **S13**) on whether or not the registered programs the newly-installed program overlaps in category with one or more of the registered programs.

When one of the registered programs is judged as overlapping in category with the newly-installed program in the step **S13,** a registered program overlapping in category with the newly-installed program is deleted from the category information table (in step **S14**). When, on the other hand, none of the registered programs is judged as overlapping in category with the newly-installed program in the step **S13**, the step **S13** proceeds to the step S17.

The menu information table stored in the menu information storage unit **18** is then updated by the information table updating unit **19** by replacing, with the menu information of the newly-installed program, the menu information of the program judged as overlapping in category with the newly-installed program. The program judged as overlapping in category with the newly-installed program is then uninstalled from the program storage unit **14** (in step **S16**).

In the step **16,** the judgment may be made on whether or not to uninstall a program overlapping in category with the newly-installed program, or to make a backup copy of the program overlapping in category with the new program. When a user pushes one or more specific keys so as to uninstall a program overlapping in category with the newly-installed program, the program is uninstalled from the program storage unit **14.** When, on the other hand, the user pushes one or more specific keys so as to make a backup copy of a program overlapping in category with the newly-installed program, the backup copy of this program is made uninstalled from the program storage unit **14** may be stored together with the category information of the category information table or the menu information of the menu information table.

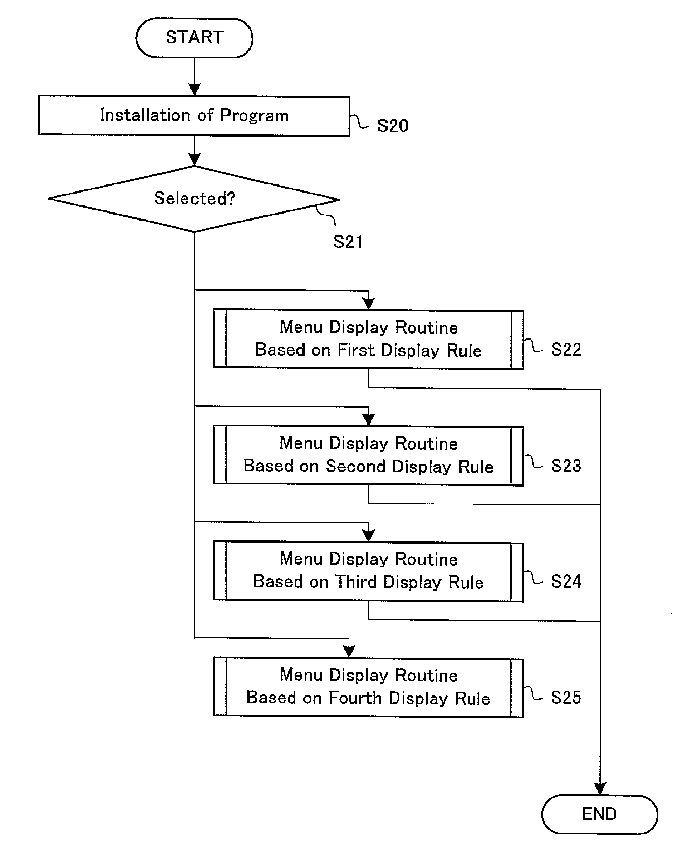

The operation of the display control unit **20** of the portable information processor 10 according to the embodiment of the present invention will be then described hereinafter with reference to the flow chart of FIG. **9.**

The judgment is made on whether or not the newly-installed program was classified as two or more categories on the basis of the menu information registered in the menu information table.

The menu information table stored in the menu information storage unit **18** is then referred (in step **S20**). The judgment is made (in step **S21**) on whether or not one of the display rules was selected in order to produce a menu on the basis of the selected display rule.

The judgment is made on whether or not one of the display rules was selected, the step **S21** proceeds to one of steps **S22** to **S25** on the basis of this judgment. When the first display rule is selected, the step **S21** proceeds to the step **S22.** When the second display rule is selected, the step **S21** proceeds to the step **S23.** When the third display rule is selected, the step **S21** proceeds to the step **S24.** When the fourth display rule is selected, the step **S21** proceeds to the step **S25.**

When the step **S21** proceeds to the step **S22** on the basis of a judgment that the first display rule was selected, the menu display routine is performed on the basis of the first display rule in the step **S22** so as to display the menu image shown in FIG. **4** on the screen. When the step **S21** proceeds to the step **S23** on the basis of a judgment that the second display rule was selected, the menu display routine is performed on the basis of the second display rule in the step **S23** so as to display the menu image shown in FIG. **5** on the screen. When the step **S21** proceeds to the step **S24** on the basis of a judgment that the third display rule was selected, the menu display routine is performed on the basis of the third display rule in the step **S24** so as to display the menu image shown in FIG. **6** on the screen. When the step **S21** proceeds to the step **S25** on the basis of a judgment that the fourth display rule was selected, the menu display routine is performed on the basis of the fourth display rule in the step **S25** so as to display the menu image shown in FIG 7 on the screen.

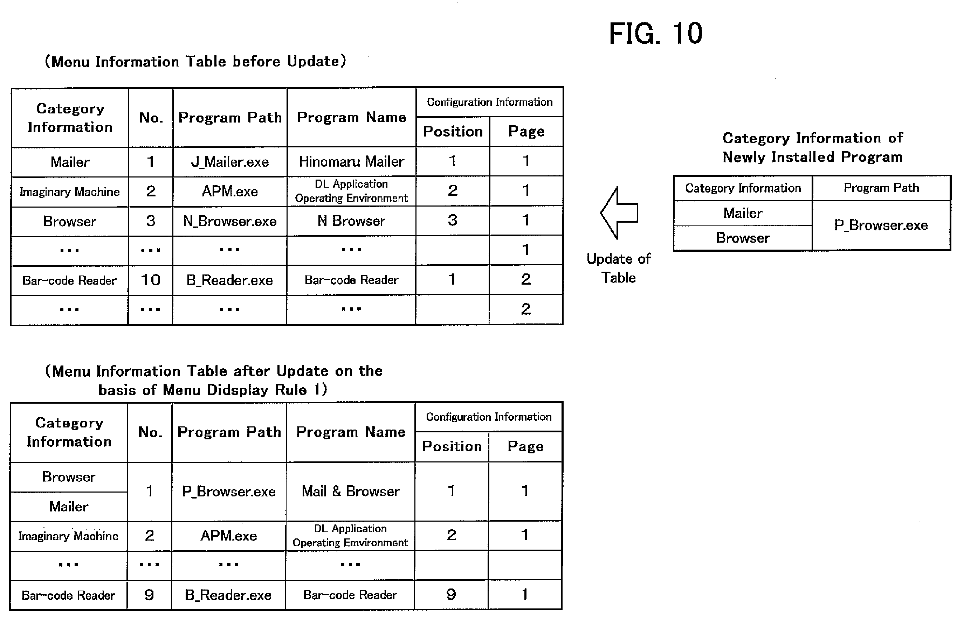

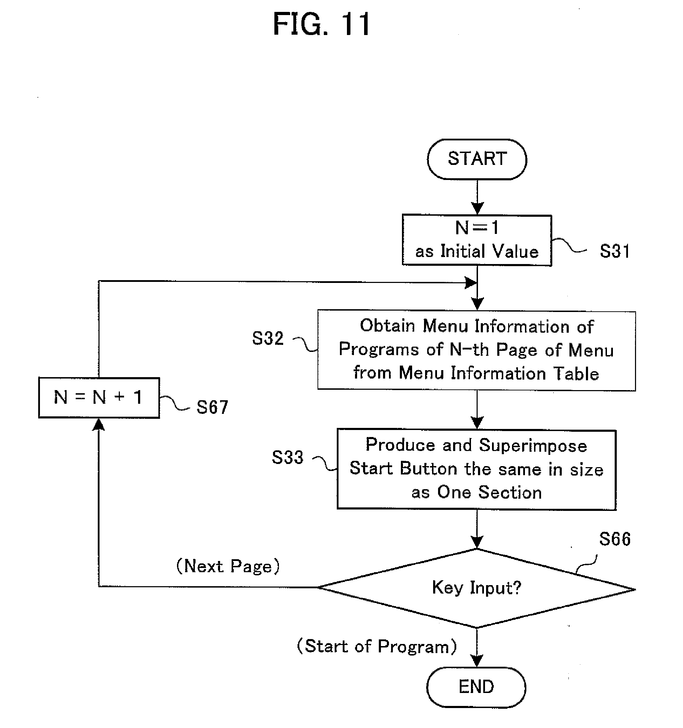

The operations to be performed, when a program classified into two categories named mailer and browser is newly installed from a memory medium, to update a menu information table, and to display a menu of programs registered in the menu information table on the basis of the first display rule will be described hereinafter with reference to FIGS. **10** and **11.**

When a program named "Mailer & Browser" and related to two categories "mailer" and "browser" is installed on the portable information processor, the newly-installed program "Mailer & Browser" is judged as overlapping in category with a program named "Hinomaru Mailer" and a program named "N Browser" registered in the menu information table of the menu information storage unit **18.** Accordingly, the programs "Hinomaru Mailer" and "N Browser" are deleted from the menu information table. The display control unit **20** superimposes, on a section from which the program "Hinomaru Mailer" was deleted, an icon for starting the newly-installed program "Mailer & Browser", and moves up icons superimposed on sections less in display priority than a section from which the program "N Browser" was deleted. The configuration information is then updated on the basis of the first display information.

When a menu of programs registered in the menu information table is displayed on a screen, a value "N" is set to a numeral "1" as page of the menu (in step **S31**). The menu information of programs of the menu of the first page is then obtained from the menu information table (in step **S32**). Even if the newly-installed program is related to two or more categories, the size of the icon of the start button of the newly-installed program "Mailer & Browser" is not changed on the basis of the first display rule. Accordingly, icons constituted as start buttons for starting the programs of the first page are superimposed on respective sections of the menu image (in step **S33**). The judgment is made whether or not to select any one of the icons for starting the programs of the first page, and whether or not to go to the next page (in step **S34**). When the user selects any one of the icons in the step **S34**, the portable information processor stops displaying the menu on the screen. When, on the other hand, the user operates keys to go to the next page, the menu of the second page is designated by N=N+1 (in step **S35**).

From the foregoing description, it will be understood that the menu display control unit 20 of the portable information processor according to the embodiment of the present invention can delete, from the menu information table, menu information of two or more programs judged as overlapping in category with the newly-installed program, and register menu information of the newly-installed program in the menu information table. When the program is newly installed, the menu display control unit **20** of the portable information processor can delete, from the menu image, icons of programs deleted from the menu information table as overlapping in category with the newly-installed program, and superimpose the icon of the newly-installed program on one of sections of the deleted icons selected as having display priority over the other of the sections of the deleted icons, and to move up icons superimposed on sections less in display priority than the other of the sections of the deleted icons.

When the menu information of the programs judged as overlapping in category with the newly-installed program is deleted from the menu information table, the portable information processor according to the embodiment of the present invention can recover a menu on the basis of a backup copy of the menu information by reason that the menu display control unit **20** makes a backup copy of the menu information deleted from the menu information table.

In the portable information processor according to the embodiment of the present invention, the menu display control unit **20** makes a backup copy of the menu information deleted from the menu information table, and to restore a menu on the basis of the backup copy of the menu information if necessary. When the menu information of the program judged as overlapping in category with the newly-installed program is deleted from the menu information table, the program corresponding to the deleted menu information may be uninstalled. When a program is uninstalled, a backup copy of the menu information of the uninstalled program is not made. Accordingly, a menu cannot be recovered under the condition that the program is uninstalled. However, the portable information processor can be reduced in amount of memory assigned to programs.

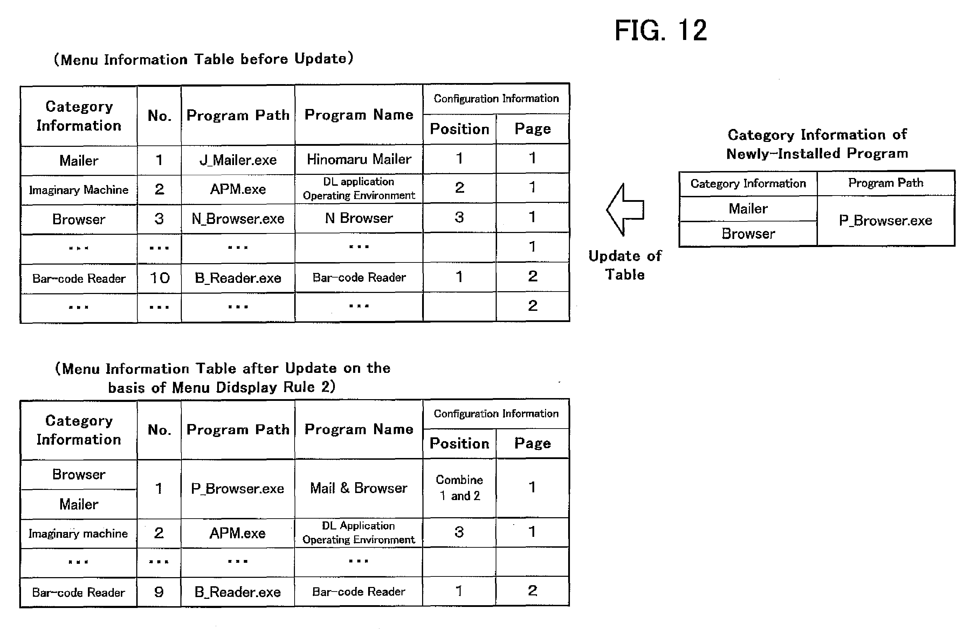

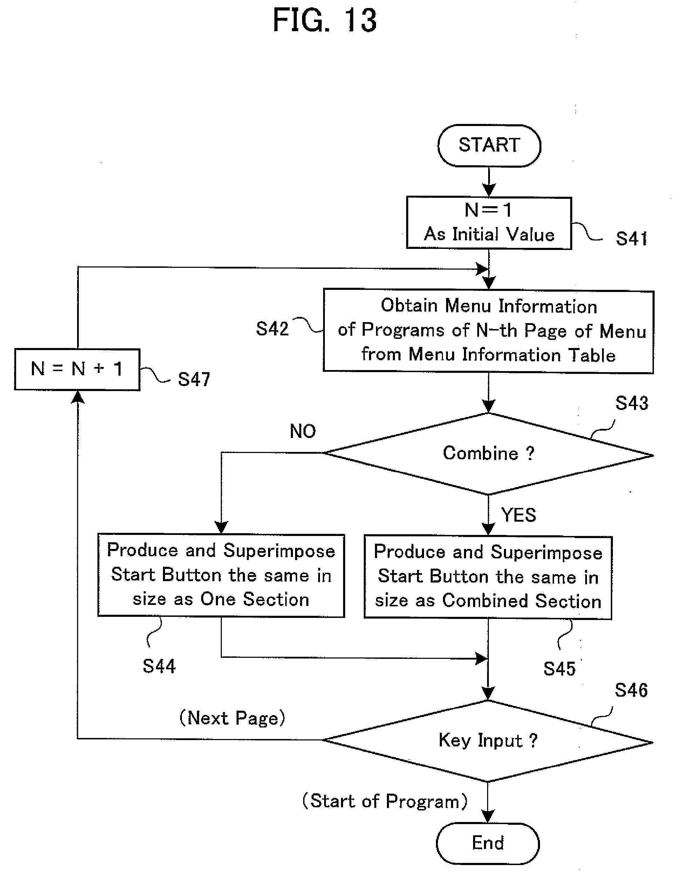

The operations to be performed, when a program classified into two categories named mailer and browser is newly installed from a memory medium, to update a menu information table, and to display a menu of programs registered in the menu information table on the basis of the second display rule will be described hereinafter with reference to FIGS. **12** and **13.**

When menu information of two programs "Hinomaru Mailer" and "N Browser" is deleted from the menu information table, menu information of the newly-installed program "Mailer & Browser" is registered in the menu information table on the basis of the display priority of the menu information of the program "Hinomaru Mailer". The display control unit combines sections of the deleted icons of the programs "Hinomaru Mailer" and "N Browser" to form a combined section, and decides the size of the icon of the newly-installed program "Mailer & Browser" on the basis of the area of the combined section.

When a menu of programs registered in the menu information table is displayed on a screen, a value "N" is set to a numeral "1" as page of the menu (in step **S41**). The menu information of programs of the menu of the first page is then obtained from the menu information table (in step **S42**). The judgment is then made (in step **S43**) on whether or not to combine two or more sections. When two or more sections are not combined, the step **S43** proceeds to step **S44.** An icon the same in size as a section is produced as a start button for starting the newly-installed program, and superimposed on a designated section (in step **S44**). When, on the other hand, two or more sections are combined, the step **S43** proceeds to step **S45**. An icon the same in size as a combined section is produced as a start button for the newly-installed program, and superimposed on the combined section (in step **S46).** In this embodiment, an icon the same in size as two sections combined by two categories of the newly-installed program "Mailer & Browser" is produced as a start button for starting the newly-installed program "Mailer & Browser". The judgment is made whether or not to select any one of the icons for starting the programs of the first page, and whether or not to go to the next page (in step **S44**). When the user selects any one of the icons in the step **S46**, the portable information processor stops displaying the menu on the screen. When, on the other hand, the user operates keys to go to the next page, the menu of the second page is designated by N=N+1 (in step **S47**).

From the foregoing description, it will be understood that the portable information processor can prevent the programs from overlapping in category with the newly-installed program, without changing positions of icons of programs which were not judged as overlapping in category with the newly-installed program, by reason that the display control unit 20 deletes icons of programs judged as overlapping in category with the newly-installed program, combines sections of the deleted icons to form a combined section, decides the size of the icon of the newly-installed program on the basis of the area of the combined section, and superimposes the icon of the newly-installed program on the combined section.

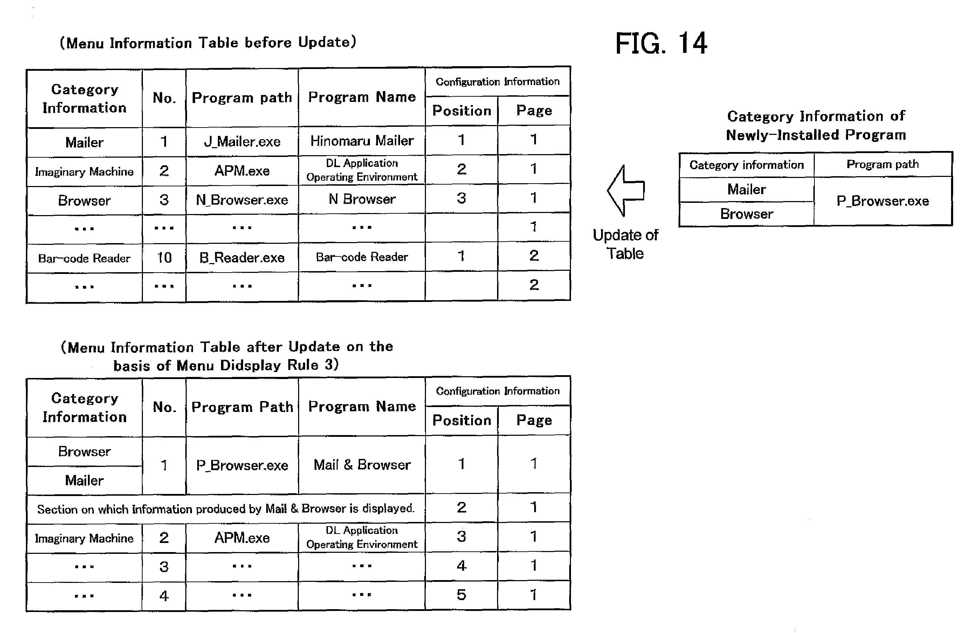

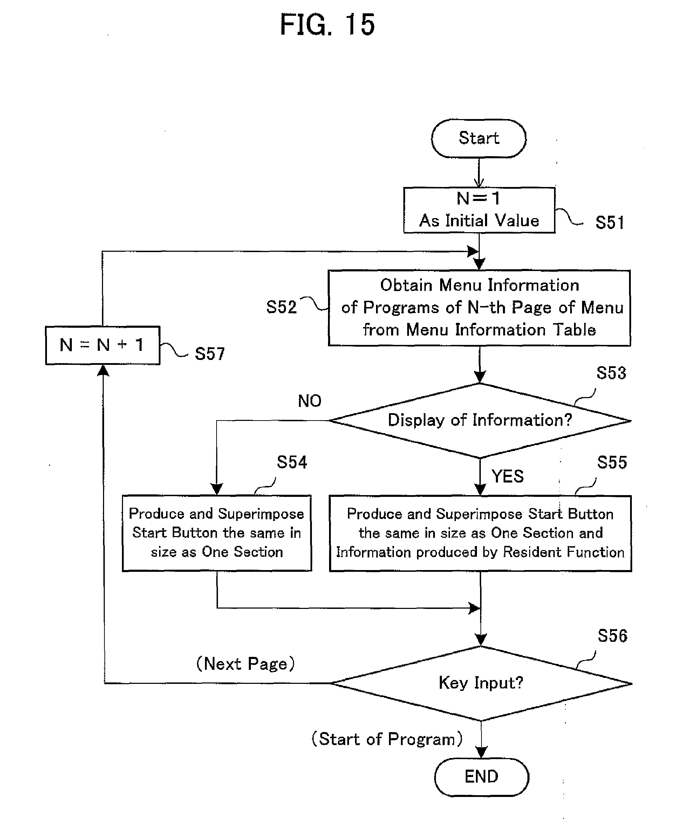

The operations to be performed, when a program classified into two categories named mailer and browser is newly installed from a memory medium, to update a menu information table, and to display a menu of programs registered in the menu information table on the basis of the third display rule will be described hereinafter with reference to FIGS. **14** and **15.**

The configuration information of the menu information table is updated on the basis of the third display rule to ensure that icons of programs judged as overlapping in category with the newly-installed program "Mailer & Browser" are deleted, the icon of the newly-installed program "Mailer & Browser" is superimposed on a section of the deleted icon of the program "Hinomaru", and information produced by a resident function of the newly-installed program "Mailer & Browser" is displayed on the menu.

When a menu of programs registered in the menu information table is displayed on a screen, a value "N" is set to a numeral "1" as page of the menu (in step **S51**). The menu information of programs of the menu of the first page is then obtained from the menu information table (in step **S52**). The judgment is then made (in step **S53**) on whether or not to display information produced by a resident function of the newly-installed program. When the judgment is made that the information of the resident function is not displayed, the step **S53** proceeds to the step **S54**. An icon the same in size as a section is produced as a start button for starting the newly-installed program, and superimposed on a section (in step **S54**). When, on the other hand, the judgment is made that the information of the resident function is displayed, the step **S53** proceeds to the step **S55**. An icon the same in size as a section is produced and superimposed on an adjacent section (in step **S54**). The judgment is made whether or not to select any one of the icons for starting the programs of the first page, and whether or not to go to the next page (in step **S56**). When the user selects any one of the icons in the step **S56,** the portable information processor stops displaying the menu on the screen. When, on the other hand, the user operates keys to go to the next page, the menu of the second page is designated by N=N+1 (in step **S57**).

From the foregoing description, it will be understood that the portable information processor according to the embodiment of the present invention can superimpose the icon of the newly-installed program "Mailer & Browser" on a section of the deleted icon of the program "Hinomaru", and to display, on an adjacent section, information produced by a resident function of the newly-installed program "Mailer & Browser" by reason that, when the program "Mailer & Browser" is installed on the portable information processor, the configuration information of the menu information table is updated to ensure that information produced by a resident function of the newly-installed program "Mailer & Browser" is displayed on the menu. Further, the portable information processor according to the embodiment of the present invention can superimpose the icon of the newly-installed program "Mailer & Browser" on a section of the deleted icon of the program "Hinomaru", and to display, on a section from which the icon of the program "N Browser" was deleted, information produced by a resident function of the newly-installed program "Mailer & Browser" by reason that, when the program "Mailer & Browser" is installed on the portable information processor, two programs "Hinomaru" and "N Browser" are deleted as overlapping in category with the newly- installed program "Mailer & Browser".

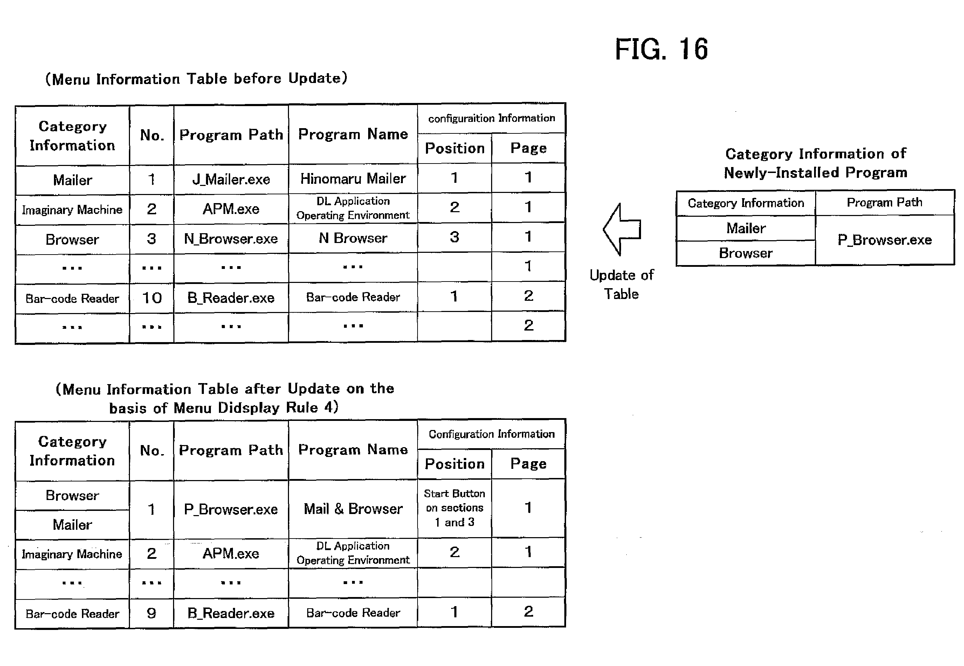

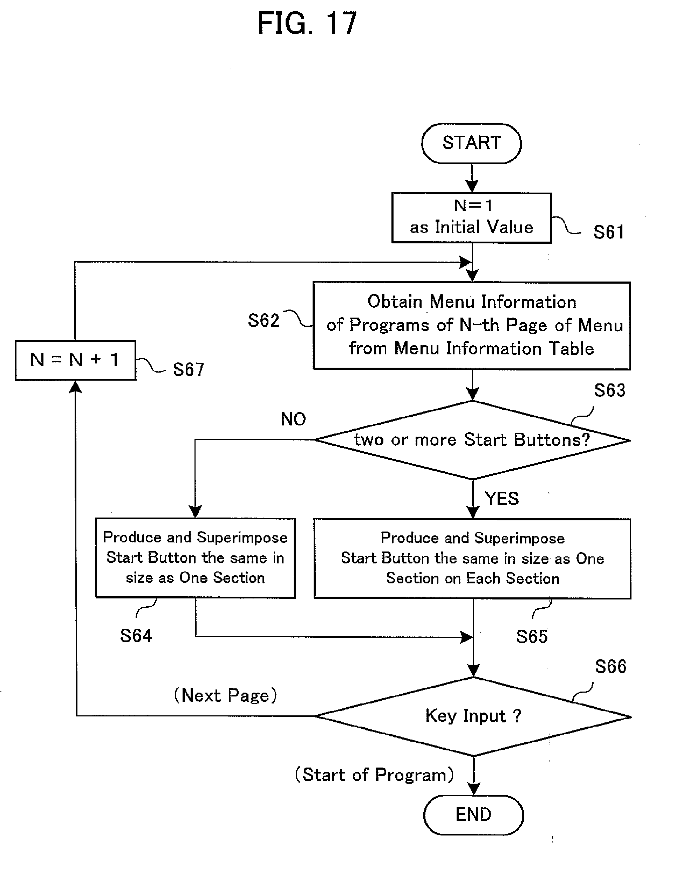

The operations to be performed, when a program classified into two categories named mailer and browser is newly installed from a memory medium, to update a menu information table and to display a menu of programs registered in the menu information table on the basis of the fourth display rule will be described hereinafter with reference to FIGS. **16** and **17.**

The configuration information of the menu information table is updated on the basis of the fourth display rule to ensure that icons of programs judged as overlapping in category with the newly-installed program "Mailer & Browser" are deleted, and the icon of the newly-installed program "Mailer & Browser" is superimposed on both a section of the deleted icon of the program "Hinomaru" and a section of the deleted icon of the program "Browser" on the basis of the fourth display rule.

When a menu of programs registered in the menu information table is displayed on a screen, a value "N" is set to a numeral "1" as page of the menu (in step **S61**). The menu information of programs of the menu of the first page is then obtained from the menu information table (in step **S62**). The judgment is then made (in step **S63**) on whether or not to produce two or more icons each of which is constituted as start buttons for starting the newly-installed program. When the judgment is made that one icon needs to be produced, the step **S63** proceeds to the step **S64**. An icon the same in size as a section is produced as a start button for starting the newly-installed program, and superimposed on a section (in step **S64**). When, on the other hand, the judgment is made that two or more icons need to be produced, the step **S63** proceeds to the step **S65**. Two or more icons the same in size as respective sections are produced and superimposed on those sections (in step **S65**). The judgment is made whether or not to select any one of the icons for starting the programs of the first page, and whether or not to go to the next page (in step **S66**). When the user selects any one of the icons in the step **S66**, the portable information processor stops displaying the menu on the screen. When, on the other hand, the user operates keys to go to the next page, the menu of the second page is designated by N=N+1 (in step **S67**).

From the foregoing description, it will be understood that the portable information processor according to the embodiment of the present invention can superimpose the icon of the newly-installed program, for example, "Mailer & Browser" on both a section of the deleted icon of the program "Hinomaru" and a section of the deleted icon of the program "Browser" on the basis of the fourth display rule by reason that, when the program "Mailer & Browser" is installed on the portable information processor, two programs "Hinomaru" and "Browser" judged as overlapping in category with the newly-installed program "Mailer & Browser" is deleted from the menu information table.

### INDUSTRIAL APPLICABILITY OF THE PRESENT INVENTION

From the foregoing description, it will be understood that the portable information processor and installation method according to the present invention can prevent the registered programs from overlapping in category with the newly-installed program, and display a menu of the registered programs on the basis of categories of the registered programs, and is useful as a portable information processor, such as for example a cellular telephone and a portable data assistance, in which a menu of the programs is displayed on a relatively small screen.

## Claims

1. A portable information processor, comprising:
a display unit operable to display a menu image indicating a menu of registered programs, said menu image having a plurality of sections;
a display control unit operable to control said display unit to superimpose icons on said sections of said menu image as start buttons for starting said registered programs;
a category information obtaining unit operable to obtain category information indicating a category of a newly-installed program;
a category judging unit operable to compare said newly-installed program with said registered programs, and to judge whether or not said newly-installed program overlaps in category with one or more of said registered programs, wherein
said display control unit decides, on the basis of the judgment made by said category judging unit, a section to be occupied by an icon as a start button for starting said newly-installed program.

2. A portable information processor according to claim 1, wherein, when one of said registered programs is judged as overlapping in category with said newly-installed program by said category judging unit, said display control unit deletes an icon of a registered program judged as overlapping in category with said newly-installed program, and superimposes said icon of said newly-installed program on a section of said deleted icon.

3. A portable information processor according to claim 1, wherein, when two or more of said registered programs are judged as overlapping in category with said newly-installed program by said category judging unit, said display control unit deletes icons of registered programs judged as overlapping in category with said newly-installed program, superimposes said icon of said newly-installed program on one of sections of said deleted icons selected as having display priority over the other of said sections of said deleted icons, and moves up, to said other of said sections of said deleted icons, icons superimposed on sections less in display priority than said other of said sections of said deleted icons.

4. A portable information processor according to claim 1, wherein, when two or more of said registered programs are judged as overlapping in category with said newly-installed program by said category judging unit, said display control unit deletes icons of registered programs judged as overlapping in category with said newly-installed program, combines sections of said deleted icons to form a combined section, and decides the size of said icon of said newly-installed program on the basis of the area of said combined section.

5. A portable information processor according to claim 1, wherein, when two or more of said registered programs are judged as overlapping in category with said newly-installed program by said category judging unit, said display control unit deletes icons of registered programs judged as overlapping in category with said newly-installed program, superimposes said icon of said newly-installed program on one of sections of said deleted icons selected as having display priority over the other of said sections of said deleted icons, and superimposes, on said other of said sections of said deleted icons, information produced by a resident function of said newly-installed program.

6. A portable information processor according to claim 1, wherein, when two or more of said registered programs are judged as overlapping in category with said newly-installed program by said category judging unit, said display control unit deletes icons of registered programs judged as overlapping in category with said newly-installed program, superimposes said icon of said newly-installed program on each section of said deleted icons.

7. A portable information processor according to claim 1, further comprising a category information storage unit having category information table indicating categories of said registered programs, and wherein
said category information obtaining unit registers said category information of said newly-installed program in said category information table, and
said category judging unit judges whether or not said newly-installed program overlaps in category with one or more of said registered programs on the basis of said category information table, and deletes, from said category information table on the basis of the judgment of said category judging unit, category information of one or more registered programs judged as overlapping in category with said newly-installed program.

8. A portable information processor according to claim 7, wherein said category information storage unit makes a backup copy of said category information of said registered programs judged as overlapping in category with said newly-installed program when said category information of said registered programs judged as overlapping in category with said newly-installed program is deleted from said category information table, and restores a menu by using said backup copy of said category information in said category information table when said backup copy of said category information is designated.

9. A portable information processor according to claim 1, further comprising a menu information storage unit having a menu information table indicating menu information of said registered programs, and wherein
said display control unit registers menu information of said newly-installed program in said menu information table when said category information of said newly-installed program is registered in said category information table, deletes, from said menu information table, menu information of one or more registered programs judged as overlapping in category with said newly-installed program when category information of said registered programs judged as overlapping in category with said newly-installed program is deleted from said category information table, and to change the positions of said icons as said start buttons for starting said registered programs on the basis of said updated menu information table.

10. A portable information processor according to claim 7, further comprising a program uninstalling unit operable to uninstall one or more registered programs judged as overlapping in category with said newly-installed program when said category information of said one or more registered programs judged as overlapping in category with said newly-installed program is deleted from said category information table.

11. A portable information processor according to claim 10, wherein, when two or more registered programs judged as overlapping in category with said newly-installed program are uninstalled, said display control unit deletes icons of uninstalled programs from said menu image, superimposes said icon of said newly-installed program on one of sections of said deleted icons selected as having display priority over the other of said sections of said deleted icons, and moves up, to said other of said sections of said deleted icons, icons superimposed on sections less in display priority than said other of said sections of said deleted icons.

12. A portable information processor according to claim 10, wherein, when two or more registered programs judged as overlapping in category with said newly-installed program are uninstalled, said display control unit deletes, from said menu image, icons of uninstalled programs, combines sections of said deleted icons to form a combined section, and decides the size of said icon of said newly-installed program on the basis of the area of said combined section.

13. A portable information processor according to claim 10, wherein, when two or more registered programs judged as overlapping in category with said newly-installed program are uninstalled, said display control unit deletes, from said menu image, icons of uninstalled programs, superimposes said icon of said newly-installed program on one of sections of said deleted icons selected as having display priority over the other of said sections of said deleted icons, and superimposes, on said other of said sections of said deleted icons, information produced by a resident function of said newly-installed program.

14. A portable information processor according to claim 10, wherein, when two or more registered programs judged as overlapping in category with said newly-installed program are uninstalled, said display control unit deletes, from said menu image, icons of uninstalled programs, superimposes said icon of said newly-installed program on each section of said deleted icons.

15. An installation method, comprising:
controlling a display unit to superimpose icons on sections of menu image as start buttons for starting registered programs,
obtaining category information indicating a category of a newly-installed program,
comparing said newly-installed program with said registered programs, and
judging whether or not said newly-installed program overlaps in category with one or more of said registered programs, and
deleting an icon of a registered program judged as overlapping in category with said newly-installed program, and superimposing said icon of said newly-installed program on a section of said deleted icon when one of said registered programs is judged as overlapping in category with said newly-installed program.

16. An installation method according to claim 15, further comprising:
uninstalling a registered program judged as overlapping in category with said newly-installed program when said registered program is judged as overlapping in category with said newly-installed program.

17. An installation method according to claim 16, further comprising:
making a backup copy of a registered program judged as overlapping in category with said newly-installed program when uninstalling said registered program judged as overlapping in category with said newly-installed program.

18. An installation method according to claim 15, further comprising:
making a backup copy of category information of a registered program judged as overlapping in category with said newly-installed program when uninstalling said registered program judged as overlapping in category with said newly-installed program.
